# FASCICULE DE BREVET EUROPEEN

(11) **EP 2 925 579 B1**
(45) Date de publication et mention de la délivrance du brevet: **14.09.2016**
(21) Numéro de dépôt: 13798668.3
(22) Date de dépôt: 29.11.2013
(51) Int. Cl.: B60T 13/567, F16B 11/00, F16L 41/12, F16B 4/00, F16B 7/08

(54) **SERVOFREIN À DÉPRESSION MUNI DE TUBES DE PASSAGE DE VIS DE FIXATION ET SON PROCÉDÉ DE RÉALISATION**
VAKUUMBREMSKRAFTVERSTÄRKER MIT DURCHGANGSROHREN ZUR MONTAGE VON SCHRAUBEN UND HERSTELLUNGSVERFAHREN
VACUUM BRAKE BOOSTER EQUIPPED WITH PASSAGE TUBES FOR MOUNTING SCREWS AND METHOD OF PRODUCTION

(30) Priorité: 30.11.2012 FR 1261464
(43) Date de publication de la demande: 07.10.2015
(73) Titulaire: Robert Bosch GmbH, 70442 Stuttgart (DE)
(72) Inventeur: BERTHOMIEU, Bruno, E-08041 Barcelona (ES); SIMON BACARDIT, Joan, E-08013 Barcelona (ES)
(86) Numéro de dépôt international: PCT/EP2013/075168
(87) Numéro de publication internationale: WO 2014/083183

(56) Documents cités:
- EP-A1- 2 058 195
- US-A1- 2002 171 239
- US-A1- 2007 089 601

## Description

### Domaine de l'invention

La présente invention a pour objet un servofrein à dépres- sion dont le boîtier est traversé par des tubes de passage des vis de fixa- tion du servofrein à la cloison de l'habitacle du véhicule, chaque tube étant fixé par sertissage par son extrémité arrière dans un orifice du fond du boîtier.

L'invention a également pour objet un procédé de réalisa- tion d'un tel servofrein à dépression.

### Etat de la technique

On connaît déjà un tel servofrein à dépression muni de tubes pour le passage des vis de fixation tenant en même temps le maître- cylindre de manière démontable séparément sur le servofrein.

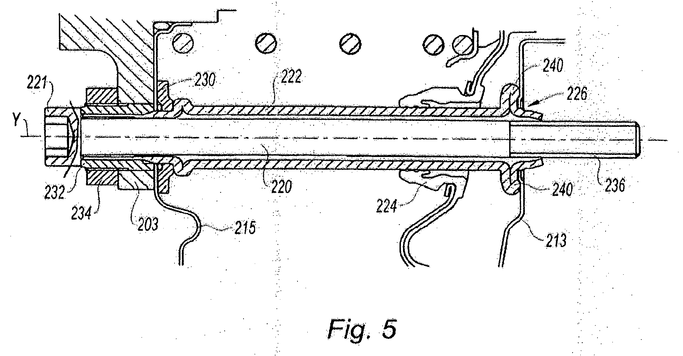

Un tel servofrein est décrit dans le document EP 2 058 195 dont la figure 2C reprise ici comme figure 5, montre le tube de passage d'un servofrein à dépression selon l'état de la technique; les références utilisées dans la figure 2C sont reprises ici pour ce rappel.

A la figure 5 le tube 222 de passage de la vis est fixé au fond 213 par son pli 240 formant une surface d'appui. Le couvercle 215 est fixé près de l'autre extrémité du tube de passage par l'intermédiaire d'une rondelle 230 s'appuyant sur une butée axiale en forme de pli réali- sée à cet endroit du tube de passage 222. Au-delà du couvercle 215, le tube de passage comporte une zone extérieure filetée recevant un man- chon agrandissant le diamètre et traversant la patte 203 du maître- cylindre. Le manchon 232 a un filetage extérieur pour recevoir un écrou 234 fixant la patte 203 au manchon.

La fixation du servofrein se fait à l'aide de la vis 220 dont la tête de diamètre réduit 221 s'appuie contre l'extrémité 232 du manchon. La partie filetée 236 traverse la cloison de l'enceinte du moteur pour être fixée par un écrou non représenté.

### But de l'invention

La présente invention a pour but d'améliorer la structure du boîtier du servofrein par le sertissage de l'extrémité arrière des tubes de passage de vis au fond du boîtier du servofrein à dépression.

### Exposé et avantages de l'invention

A cet effet, la présente invention a pour objet un servofrein à dépression du type défini ci-dessus, caractérisé en ce que
- l'extrémité arrière du tube a :
   * un pli périphérique formant une gorge arrière,
   * un prolongement du tube au-delà de la gorge périphérique pour être rabattu vers l'extérieur et former une lèvre de sertissage,
- le fond du boîtier ayant un orifice recevant l'extrémité arrière du tube,
   * l'orifice étant bordé d'une couronne en creux de forme complémentaire à celle de la gorge du tube avec un bord extérieur venant contre le bord extérieur du la gorge arrière et un bord intérieur venant contre le prolongement du tube,
- le prolongement étant rabattu contre la couronne en creux du fond par sertissage.

Ce servofrein a l'avantage de réaliser un sertissage particulièrement fiable et efficace de l'extrémité arrière des tubes de passage de vis dans le fond du boîtier du servofrein. On évite la collerette résiduelle du sertissage de l'état de la technique et on réduit ainsi l'encombrement de l'assemblage. La fabrication évite également la formation de copeaux métalliques lors du sertissage et qui risqueraient d'endommager le servofrein ou la ligne de montage. Ce sertissage maintient intacte la protection superficielle de la pièce sertie.

Suivant une autre caractéristique avantageuse, l'invention a pour objet un procédé de réalisation d'un servofrein à dépression du type défini ci-dessus, caractérisé en ce qu'
- on prépare l'extrémité arrière du tube en formant un pli périphérique avec une gorge arrière ouverte vers l'arrière et on laisse un prolongement au-delà de la gorge périphérique,
- on réaliser dans le fond du boîtier un orifice destiné à recevoir l'extrémité arrière du tube en bordant cet orifice d'une couronne en creux de forme complémentaire à celle de la gorge réalisée sur le tube, cette couronne en creux venant en saillie à l'intérieur du fond et ayant un bord extérieur de forme complémentaire à celle du bord extérieur de la gorge arrière,
- on installe le tube par son extrémité arrière contre la face intérieure du fond, contre la couronne en creux en faisant passer le prolongement du tube à travers l'orifice,
- on met en place un contre appui de sertissage contre le côté avant du pli du tube installé dans l'orifice du fond puis on introduit une broche de sertissage de l'outil de sertissage dans le tube en passant par le prolongement et enfin on comprime la face de l'outil de sertissage entourant la broche contre le prolongement pour rabattre celui-ci par-dessus le bord de l'orifice, côté extérieur, pour sertir l'extrémité arrière du tube sur et dans le couvercle.

Ce procédé a l'avantage d'un sertissage très simple à réaliser sur un tube de passage, préparé, et garantissant le sertissage grâce à la surface de sertissage importante entre l'extrémité arrière du tube et le bord de l'orifice du fond du boîtier traversé par l'extrémité du tube.

### Dessins

La présente invention sera décrite ci-après de manière plus détaillée à l'aide d'un exemple de réalisation d'un servofrein à dépression selon l'invention représenté schématiquement dans les dessins annexés dans lesquels :
- la figure 1 est une vue en coupe axiale du servofrein selon l'invention au niveau des deux tubes de passage des vis de fixation non représentées.
- les figures 2A-4B montrent différentes étapes de l'opération de sertissage de l'extrémité arrière du tube dans le fond du boîtier du servofrein à dépression, les figures 2A, 3A, 4A étant des demi-coupes du fond du boîtier et les figures 2B, 3B, 4B des vues en coupe agrandies, partielles correspondant respectivement aux figures 2A, 3A, 4A montrant le détail du sertissage :

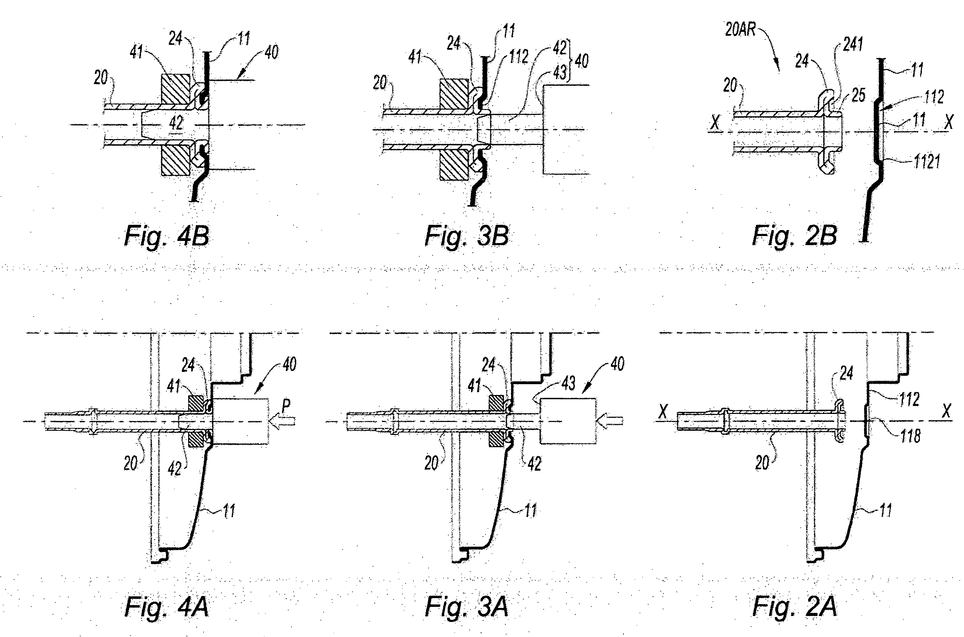

   * les figures 2A, 2B montrent l'étape de mise en place de l'extrémité arrière du tube contre la face intérieure du couvercle du boîtier,
   * les figures 3A, 3B montrent la mise en place de la broche de l'outil de sertissage dans l'extrémité du tube,
   * les figures 4An 4B montrent la fin du sertissage.
- la figure 5 est une vue en coupe reprenant la figure 2C du document EP 2 058 195 A1 de l'art antérieur.

### Description de modes de réalisation de l'invention

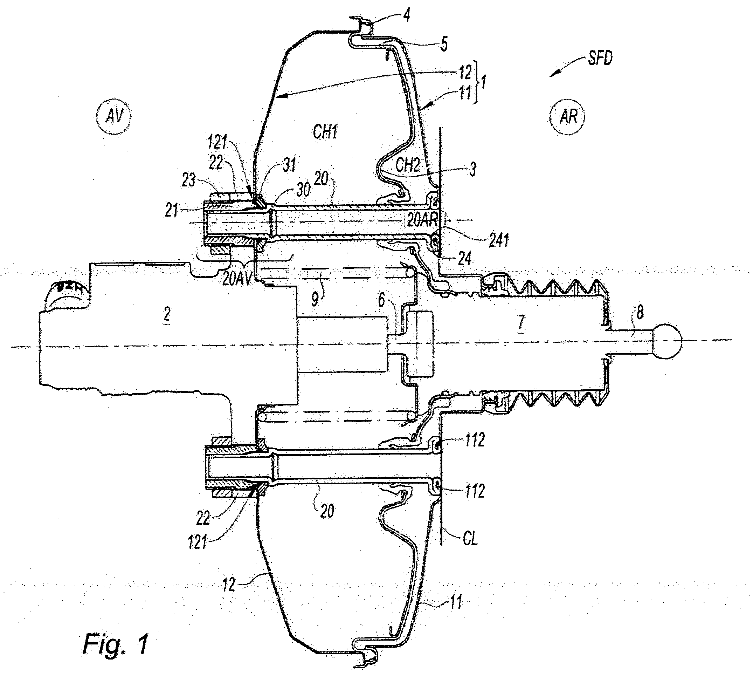

Selon la figure 1, l'invention a pour objet un servofrein à dépression SFD composé d'un boîtier à dépression 1 associé à un maître-cylindre 2 et formé d'un fond 11 relié à un couvercle 12 avec interposition d'un piston rigide 3 relié à la région de sertissage périphérique 4 du fond 11 et du couvercle 12 par une membrane 5 de façon à délimiter de part et d'autre du piston 3 une chambre CH1, CH2 chacune étant initialement mise sous vide ; la chambre CH2 est mise à l'atmosphère au moment du freinage pour créer la poussée agissant sur la tige de poussée 6 actionnant le maître-cylindre 2 tel qu'un maître-cylindre tandem. La gestion pneumatique du servofrein est assurée par un ensemble de valves 7 non détaillées actionnées par la tige de commande 8 elle-même reliée par une tringlerie à la pédale de frein non représentée. Le mouvement de la tige de commande 8 déclenche le servofrein.

Le maître-cylindre 2 est fixé au servofrein SFD et l'ensemble ainsi assemblé est fixé à la cloison CL séparant l'enceinte du moteur (AV) et l'habitacle (AR) du véhicule. Cela permet de définir l'avant AV et l'arrière AR par rapport à la cloison CL, selon l'orientation du véhicule. La fixation se fait comme cela est connu par des vis traversant le boîtier 1 du servo- frein dans des tubes 20 fixés au boîtier 1. Ces tubes 20 traversent égale- ment le piston 3 en assurant l'étanchéité des chambres. Le boîtier 1 comporte en général deux tubes 20 et reçoit ainsi deux vis munies d'un écrou pour être fixé à la cloison CL.

Chaque tube 20 servant au passage de la vis est fixé au fond 11 du boîtier 1 et reçoit en appui le couvercle 12 ; la vis sert également à fixer le maître-cylindre 2 par ses deux pattes 22 traversées chacune par un tube 20.

L'extrémité avant 20AV du tube 20 est munie du côté intérieur du boîtier, tourné vers le couvercle 12, d'un pli formant une collerette 30 servant d'appui à une rondelle 31 pour recevoir le couvercle 12. A l'extérieur du couvercle 12 l'extrémité 20AV porte un manchon 21 traversant la patte 22 du maître-cylindre 2 et l'écrou 23 vissé sur l'extrémité avant filetée 21AV du tube 20.

L'extrémité arrière 20AR du tube 20, côté cloison CL, est sertie au fond 11 du boîtier 1 du servofrein.

Les autres éléments du servofrein SFD, connus de manière générale, ne sont pas détaillés.

Selon la figure 1, les deux tubes 20 de passage de la vis de fixation dans le boîtier 1 du servofrein à dépression sont fixés, côté arrière, par un sertissage détaillé aux figures 2A-4B. Comme les tubes et les sertissages sont identiques, la description se limitera au sertissage de l'un des tubes, celui dans la moitié inférieure de la vue en coupe de la figure 1.

Selon les figures 2A, 2B, l'extrémité arrière 20AR du tube 20 comporte un pli périphérique 24 formant une gorge arrière 241 et laissant un prolongement 25 du tube au-delà de la gorge périphérique 241 selon la direction de l'axe XX du tube. Ce pli périphérique 24 avec la gorge 241 de même que les autres transformations et mises en forme du tube 20, sont réalisées antérieurement à l'opération de sertissage qui sera décrite ci-après.

Le tube 20 ainsi préparé est installé dans l'orifice 111 associé du fond 11 du boîtier 1. Cet orifice 111 est bordé par une couronne 112 en creux par rapport au plan arrière constituant la surface d'appui du fond 11 contre la cloison CL ; la partie centrale du servofrein à dépression avec son ensemble de valves 7 traverse un orifice 113 de dimensions appropriées dans la cloison 11 pour être reliée par une tringlerie à la pédale de frein.

L'orifice 111 avec la couronne en creux 112 a sa concavité tournée vers l'arrière AR. La forme de la couronne en creux 112 avec son bord 1121 correspond à la forme de la gorge arrière 241 du tube 20 de façon que lorsque le tube est engagé dans l'orifice 112, le manchon d'extrémité 25 traverse l'orifice 111 et le bord de la couronne en creux 112 du fond 11 est reçu dans la gorge arrière du pli périphérique 24.

Cette position du pli 24 et de l'orifice 111 avec la couronne en creux 112 est représentée aux figures 3A, 3B.

A ce moment, on met en place le contre-appui de sertissage représenté avec une forme d'anneau 41 engagé sur le tube 20 et prenant appui contre le côté avant du pli 24 ; la broche 42 de l'outil de sertissage 40 commence à s'engager dans le tube 20.

Sous l'effet de la poussée P (figure 4A, 4B), l'outil de sertissage 40 avec sa surface d'appui 43, rabat le manchon d'extrémité 25 par-dessus le bord de l'orifice 111 du fond 11 de manière à sertir l'extrémité arrière du tube 20 dans et sur l'orifice 111 du fond 11 du boîtier 1.

Le tube 20, en fait les deux tubes puisque le sertissage se fait de préférence simultanément, sont ainsi fixés au fond 11 du boîtier 1. Celui-ci est alors prêt à recevoir le système de valves 7 avec la tige de commande 8 et le piston 3 portant la membrane 5.

Dans l'étape suivante de réalisation du servofrein à dépression (Figure 1), on installe le couvercle 12 sur l'extrémité avant 20AV des deux tubes 20 à travers deux ouvertures 121 du couvercle 12, puis le manchon 21 est vissé extérieurement sur l'extrémité avant filetée de chaque tube 20 pour bloquer le couvercle 12 contre la rondelle d'appui 31 en butée contre le pli 30 de chaque tube en même temps que le couvercle 12 est serti au fond 11 du boîtier 1 avec interposition du bord de la membrane 5, de façon à terminer l'assemblage du boîtier 1.

Dans l'étape suivante, on installe le maître-cylindre 2 dont les deux pattes 22 munies d'un perçage respectif sont engagées sur les manchons 21 eux-mêmes filetés à l'extérieur pour serrer les pattes 22 du maître-cylindre 2 par des écrous 23 contre la face extérieure du couvercle 12 du boîtier 1.

Cet assemblage, avec également la mise en place par exemple du ressort de rappel 9 et autres éléments constitutifs non détaillés de l'ensemble de servofrein à dépression et du maître-cylindre, sont logés à l'intérieur de l'enceinte formée par le boîtier 1. L'ensemble est alors prêt pour être installé dans un véhicule et être fixé à la cloison CL séparant l'habitacle et l'enceinte du moteur, par des vis à écrou traversant les deux tubes 20.

### NOMENCLATURE

- SFD: servofrein à dépression
- CH 1, CH2: chambre du boîtier
- XX: axe du servofrein
- 1: boîtier à dépression
- 11: fond
- 111: orifice
- 112: couronne en creux
- 1121: bord
- 113: passage de l'ensemble de valves 7
- 12: couvercle
- 2: maître-cylindre
- 20: tube
- 20AV: extrémité avant
- 20AR: extrémité arrière
- 21: manchon
- 22: patte du maître cylindre
- 23: écrou
- 24: pli
- 241: gorge périphérique
- 25: prolongement/manchon d'extrémité
- 30: pli formant une collerette
- 31: rondelle d'appui
- 3: piston rigide
- 4: sertissage périphérique du boîtier
- 5: membrane
- 6: tige de poussée
- 7: ensemble de valves
- 8: tige de commande
- 9: ressort de rappel du piston

## Revendications

1. Servofrein à dépression dont le boîtier (1) est traversé par des tubes (20) de passage des vis de fixation du servofrein à la cloison (CL) de l'habitacle du véhicule, chaque tube (20) étant fixé par sertissage par son extrémité arrière (20AR) dans un orifice (111) du fond (11) du boîtier (1), servofrein **caractérisé en ce que**
- l'extrémité arrière (20AR) du tube (20) a :
* un pli périphérique (24) formant une gorge arrière (241), et
* un prolongement (25) du tube (20) au-delà de la gorge périphérique (241) pour être rabattu vers l'extérieur et former une lèvre de sertissage,
- le fond (11) du boîtier (1) a un orifice (111) recevant l'extrémité arrière (20AR) du tube,
* l'orifice (111) étant bordé d'une couronne en creux (112) de forme complémentaire à celle de la gorge (241) du tube (20) avec un bord extérieur (1121) venant contre le bord extérieur de la gorge arrière (241) et un bord intérieur venant contre le prolongement (25) du tube (20),
- le prolongement (25) est rabattu par-dessus le bord de la couronne en creux (112) du fond (11) et bloqué dans la gorge (241).

2. Procédé de réalisation d'un servofrein à dépression dont le boîtier (1) est traversé par des tubes (20) de passage des vis de fixation du servofrein à la cloison (CL) de l'habitacle du véhicule, chaque tube (20) étant fixé par sertissage par son extrémité arrière (20AR) dans un orifice (111) du fond (11) du boîtier (1),
procédé **caractérisé en ce qu'**
- on prépare l'extrémité arrière (20AR) du tube (20) en formant un pli périphérique (24) avec une gorge arrière (241) ouverte vers l'arrière et on laisse un prolongement (25) au-delà de la gorge périphérique (241),
- on réaliser dans le fond (11) du boîtier (1) un orifice (111) destiné à recevoir l'extrémité arrière (20AR) du tube (20) en bordant cet orifice (111) d'une couronne en creux (112) de forme complémentaire à celle de la gorge (241) réalisée sur le tube (20), cette couronne en creux venant en saillie à l'intérieur du fond (11) et ayant un bord extérieur (1121) de forme complémentaire à celle du bord extérieur de la gorge arrière (241),
- on installe le tube par son extrémité arrière (20AR) contre la face intérieure du fond (11), contre la couronne en creux (112) en faisant passer le prolongement (25) du tube à travers l'orifice (111),
- on met en place un contre-appui de sertissage (41) contre le côté avant du pli (24) du tube (20) installé dans l'orifice (111) du fond (11) puis on introduit une broche de sertissage (42) de l'outil de sertissage (40) dans le tube (20) en passant par le prolongement (25) et enfin on comprime la face (43) de l'outil de sertissage entourant la broche (42) contre le prolongement (25) pour rabattre celui-ci par-dessus le bord de l'orifice (111), côté extérieur, pour sertir l'extrémité arrière (20AR) du tube sur et dans le couvercle (12).

## Patentansprüche

1. Unterdruck-Bremskraftverstärker, durch dessen Gehäuse (1) Rohre (20) für den Durchgang von Schrauben zur Befestigung des Bremskraftverstärkers an der Trennwand (CL) zum Fahrgastraum des Fahrzeugs verlaufen, wobei jedes Rohr (20) durch Quetschverbinden seines hinteren Endes (20AR) in einer Öffnung (111) des Bodens (11) des Gehäuses (1) befestigt ist, wobei der Bremskraftverstärker **dadurch gekennzeichnet ist, dass**
- das hintere Ende (20AR) des Rohrs (20)
* eine Umfangsfalte (24), die eine hintere Kehle (241) bildet, und
* eine Verlängerung (25) des Rohrs (20) über die Umfangskehle (241) hinaus, um nach außen umgeschlagen zu werden und eine Quetschverbindungslippe zu bilden, besitzt,
- der Boden (11) des Gehäuses (1) eine Öffnung (111) besitzt, die das hintere Ende (20AR) des Rohrs aufnimmt,
* wobei die Öffnung (111) durch einen Hohlkranz (112) mit einer Form, die zu jener der Kehle (241) des Rohrs (20) komplementär ist, begrenzt ist, wobei eine äußere Kante (1121) an der äußeren Kante der hinteren Kehle (241) anliegt und eine innere Kante an der Verlängerung (25) des Rohrs (20) anliegt,
- die Verlängerung (25) über den Rand des Hohlkranzes (112) des Bodens (11) hinaus umgeschlagen ist und in der Kehle (241) blockiert ist.

2. Verfahren zum Herstellen eines Unterdruck-Bremskraftverstärkers, durch dessen Gehäuse (1) Rohre (20) für den Durchgang von Schrauben zur Befestigung des Bremskraftverstärkers an der Trennwand (CL) zum Fahrgastraum des Fahrzeugs verlaufen, wobei jedes Rohr (20) durch Quetschverbinden seines hinteren Endes (20AR) in einer Öffnung (111) des Bodens (11) des Gehäuses (1) befestigt ist,
wobei das Verfahren **dadurch gekennzeichnet ist, dass**
- das hintere Ende (20AR) des Rohrs (20) vorbereitet wird, indem eine Umfangsfalte (24) mit einer hinteren Kehle (241), die nach hinten offen ist, gebildet wird und eine Verlängerung (25) über die Umfangskehle (241) hinaus bestehen gelassen wird,
- in dem Boden (11) des Gehäuses (1) eine Öffnung (111) verwirklicht wird, die dazu bestimmt ist, das hintere Ende (20AR) des Rohrs (20) aufzunehmen, indem diese Öffnung (111) durch einen Hohlkranz (112) begrenzt wird, der eine Form hat, die zu jener der Kehle (241), die in dem Rohr (20) verwirklicht ist, komplementär ist, wobei dieser Hohlkranz in den Boden (11) vorsteht und eine äußere Kante (1121) besitzt, die eine Form hat, die zu jener der äußeren Kante der hinteren Kehle (241) komplementär ist,
- das Rohr mit seinem hinteren Ende (20AR) an der inneren Fläche des Bodens (11) an dem Hohlkranz (112) installiert wird, indem die Verlängerung (25) des Rohrs durch die Öffnung (111) geführt wird,
- ein Gegenanschlag der Quetschverbindung (41) an der Vorderseite der Falte (24) des Rohrs (20), die in der Öffnung (111) des Bodens (11) installiert ist, angeordnet wird, anschließend ein Quetschverbindungsstift (42) des Quetschverbindungswerkzeugs (40) in das Rohr (20) eingeführt wird, indem er an der Verlängerung (25) vorbeigeführt wird, und schließlich die Fläche (43) des Quetschverbindungswerkzeugs, die den Stift (42) umgibt, gegen die Verlängerung (25) gedrängt wird, um diese über die Kante der Öffnung (111) auf der Außenseite umzuschlagen, um das hintere Ende (20AR) des Rohrs auf den und in dem Deckel (12) zu quetschen.

## Claims

1. Vacuum operated brake booster, through the casing (1) of which there extend tubes (20) for the introduction of the screws for fixing the brake booster to the wall (CL) of the passenger compartment of the vehicle, each tube (20) being fixed by crimping by means of the rear end (20AR) thereof in a hole (111) of the base (11) of the casing (1),
which brake booster is **characterized in that**
- the rear end (20AR) of the tube (20) has:
* a peripheral fold (24) forming a rear groove (241), and
* an extension (25) of the tube (20) beyond the peripheral groove (241) in order to be folded toward the outer side and to form a crimping lip,
- the base (11) of the casing (1) has a hole (111) which receives the rear end (20AR) of the tube,
* the hole (111) being bordered by a recessed ring (112) which has a form complementary to that of the groove (241) of the tube (20) with an outer edge (1121) which moves against the outer edge of the rear groove (241) and an inner edge which moves against the extension (25) of the tube (20),
- the extension (25) is folded above the edge of the recessed ring (112) of the base (11) and blocked in the groove (241).

2. Method for producing a vacuum operated brake booster, through the casing (1) of which there extend tubes (20) for the introduction of the screws for fixing the brake booster to the wall (CL) of the passenger compartment of the vehicle, each tube (20) being fixed by crimping by means of the rear end (20AR) thereof in a hole (111) of the base (11) of the casing (1),
which method is **characterized in that**
- the rear end (20AR) of the tube (20) is prepared by forming a peripheral fold (24) with a rear groove (241) which is open toward the rear and an extension (25) beyond the peripheral groove (241) is left,
- a hole (111) which is intended to receive the rear end (20AR) of the tube (20) is produced in the base (11) of the casing (1), that hole (111) being bordered with a recessed ring (112) which has a form complementary to that of the groove (241) which is produced on the tube (20), that recessed ring projecting inside the base (11) and having an outer edge (1121) which has a form complementary to that of the outer edge of the rear groove (241),
- the tube is installed via its rear end (20AR) against the inner face of the base (11), against the recessed ring (112), causing the extension (25) of the tube to move through the hole (111),
- a crimping counter-abutment (41) is positioned against the front side of the fold (24) of the tube (20) which is installed in the hole (111) of the base (11), then a crimping spindle (42) of the crimping tool (40) is introduced into the tube (20), passing via the extension (25), and finally the face (43) of the crimping tool surrounding the spindle (42) is compressed against the extension (25) in order to fold it over the edge of the hole (111), at the outer side, in order to crimp the rear end (20AR) of the tube on and in the cover (12).
